# EUROPEAN PATENT SPECIFICATION

(11) **EP 1 996 825 B1**
(45) Date of publication and mention of the grant of the patent: **09.06.2010**
(21) Application number: 06726392.1
(22) Date of filing: 15.03.2006
(51) Int. Cl.: F16C 32/06, B23Q 1/38, F16F 15/023

(54) **AEROSTATIC DEVICE DAMPER**
AEROSTATISCHER VORRICHTUNGSDÄMPFER
REGISTRE POUR DISPOSITIF AEROSTATIQUE

(43) Date of publication of application: 03.12.2008
(73) Proprietor: Brunel University, Middlesex UB8 3PH (GB)
(72) Inventor: WARDLE, Frank Peter, Stanton Fitzwarren, Swindon, SN6 7SA (GB)
(74) Representative: Lees, Kate Jane
(86) International application number: PCT/GB2006/000911
(87) International publication number: WO 2006/100437

(56) References cited:
- US-A- 3 049 383
- US-A- 4 517 852

## Description

This invention relates to a damping device for an aerostatic device and, more particularly but not exclusively, for an aerostatic linear slide, aerostatic rotary table and/or aerostatic spindle.

Aerostatic slides and rotary tables are used on ultra precision machine tools to provide extremely accurate linear or rotational motion and positioning. The accuracies achieved are unmatched by equivalent slides or tables with rolling element, hydrostatic or hydrodynamic types of bearing. However, as a sub system on a machine tool the slide or table's structural properties of static stiffness and damping are also important. On these systems, reasonable static stiffness can usually be achieved as there is room for bearings of large area. However increasing bearing size does not substantially improve damping factors and aerostatic bearings are generally known for their low damping properties. This disadvantage often limits the surface finish or material removal rate that can be achieved by the machine tool.

US4157852 describes a magnetic oil squeeze film damper, incorporated into an air bearing slide to damp vibration. Damping is achieved by magnetic oil provided in a cavity. Continuous ring magnets are provided at the exit of the drive shaft to seal the oil within the cavity.

The present invention seeks to improve the damping of aerostatic devices.

According to the present invention, there is provided an aerostatic device for ultra precision machine tools, the aerostatic device having a damping device for use at any angle, including vertical, and comprising a male part having a projecting portion, a female part having a channel in which the projecting portion of the male part is slidably receivable, means for providing a magnetic field, the magnetic field means being at or adjacent to the projecting portion of the male part and/or the channel of the female part, characterised in that the means for providing a magnetic field comprises sets of spaced apart holes containing opposing magnets aligned along a longitudinal extent of the male or female part to form a uniform magnetic field, and wherein magnetic oil is interposed between the projecting portion of the male part and the channel of the female part and only within the magnetic field of the magnetic field means, the in use magnetic oil being retained in or substantially in position by the magnetic field, so that undesirable movement of the male part and/or female part is damped by the oil without the oil being displaced from the projecting portion and/or the channel.

Preferable and/or optional features of the first aspect of the invention are set forth in claims 2 to 14, inclusive.

The invention will now be described, by way of example only, with reference to the accompanying drawings of which :
Figure 1 is an exploded perspective view of a first embodiment of a damping device of an aerostatic device, in accordance with the present invention;
Figure 2 is a diagrammatic end view of an aerostatic dovetail slide, in accordance with the present invention, incorporating the damping device shown in Figure 1;
Figure 3 is an exploded perspective view of a second embodiment of a damping device of an aerostatic device, in accordance with the present invention;
Figure 4 is a diagrammatic in use vertical cross-sectional view of an aerostatic rotary table, in accordance with the second aspect of the present invention, incorporating the damping device shown in Figure 3;
Figure 5 is a perspective view of the dovetail slide shown in Figure 2, showing five types of relative movement between base and carriage that the damping device can damp; and
Figure 6 is a graph showing the dynamic response of the aerostatic slide, with (referenced as 'A') and without (referenced as 'B') the use of the damping device shown in Figure 1.

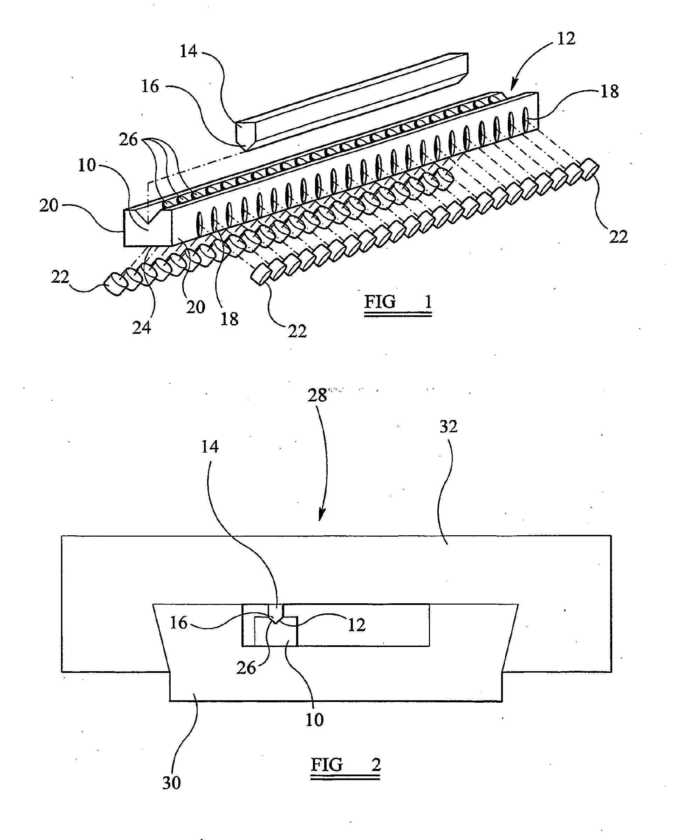

Referring firstly to Figure 1, there is shown a first embodiment of a damping device for damping vibration in linear aerostatic slides. The damping device comprises a female part 10, in this case being an elongate rectilinear rail, having a channel 12 formed, typically by machining, in one surface and extending along the longitudinal extent of the female part 10. The channel 12, in this case, has a V-shaped lateral cross-section.

The damping device also comprises a male part 14, in this case being an elongate rectilinear slider, having a projecting portion 16 which extends along the longitudinal extent of the male part 14. The projecting portion 16 has a V-shaped lateral cross-section which matches or substantially matches the V-shaped channel 12 of the female part 10.

The female part 10 includes two sets of holes 18. The holes 18 are aligned to extend along the longitudinal extent of the female part 10, in parallel or substantially in parallel with the channel 12. The holes 18 are formed in opposing exterior side surfaces 20 of the female part 10. Permanent disk-shaped magnets 22 are positioned in the holes 18. Opposing magnets 22 have opposing polarities, and the magnets 22 on each side 20 are arranged uniformly, so that a standard uniform magnetic field across the channel 12 is formed.

It will, however, be appreciated that any suitable means for providing a magnetic field can be utilised, such as strip-shaped magnets, and/or magnets which are permanent or electromagnetic.

Magnetic oil 26, such as Ferrotec RTM, is provided in the channel 12. The magnetic oil 26 is attracted to the positions where the magnetic field is strongest, and a series of oil droplets form along each side of the V-shaped channel 12, corresponding to the positions of the magnets 22. The use of magnets and magnetic oil dispenses with the need for periodically renewing the lubrication between the surfaces, due to the lubricant being squeezed out of the channel, or providing elaborate and expensive apparatus for replenishing lubricating fluid automatically.

The male slider part 14 is mated with the female part 10 by insertion of the projecting portion 16 into the channel 12. The projecting portion 16 rides on the magnetic oil 26 in the channel 12, thus maintaining a small gap between the surfaces of the projecting portion 16 and the surfaces of the channel 12. Changes to the magnitude of the gap, due to vibration, generates a squeeze film damping force in the oil 26. The oil 26 is not displaced from the channel 12 during squeeze film damping, due to the magnetic force imparted by the magnets 22.

It will be understood that the magnetic field means can be provided, alternatively or additionally, on the male part 14.

Referring to Figure 2, there is shown an aerostatic device in the form of an aerostatic dovetail slide 28. The slide 28 incorporates the damping device described above.

In this case, the female part 10 is rigidly attached to a base 30 of the slide 28, and the male part 14 is rigidly attached to an underside of a carriage 32. The channel 12 of the female part 10 extends the full length of the base 30 of the slide 28. The male part 14 preferably extends the full length of the carriage 32, but a plurality of spaced male parts 14 can be utilised.

Obviously, the female part 10 and male part 14 can be formed unitarily with the base 30 and carriage 32, if necessary.

Although only one damping device is shown, more than one damping device can be used.

The V-shaped cross-section of the projecting portion 16 of the male slider part 14 can be relieved over a portion of its length to adjust the area and position of the oil film. For example, it can be beneficial to have a greater volume of film more towards the ends of the carriage, so that the oil can damp carriage tilt more effectively.

Furthermore, shaping the lateral cross-sections of the projecting portion 16 and the channel 12, so that the gap formed therebetween tends to reduce as the longitudinal edges of the channel 12 are approached has been found to improve the squeeze film damping.

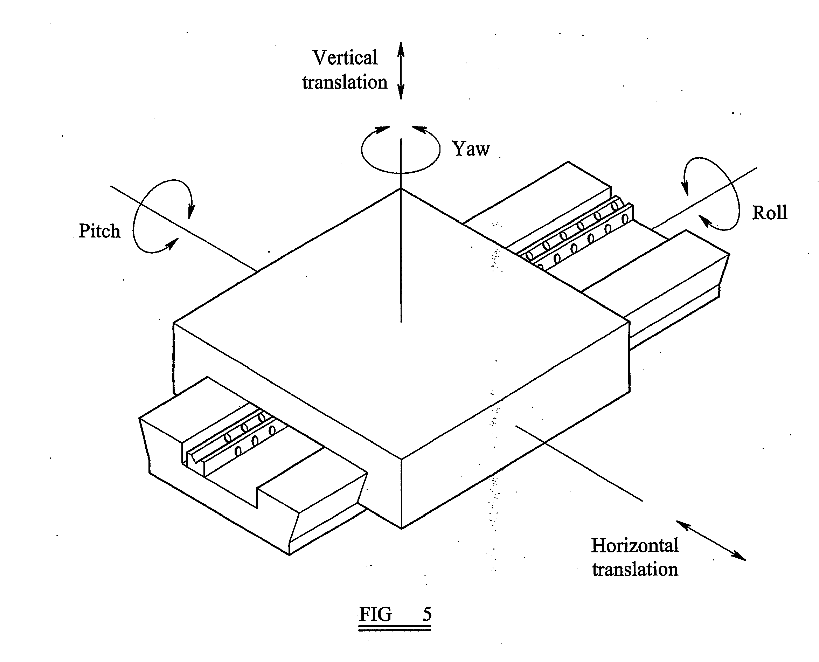

Figure 5 shows five natural modes of vibration of the carriage 32 of the aerostatic slide 28. There are two translational and three rotational modes, referred to as pitch, roll and yaw. The damping device effectively damps all five modes of vibration.

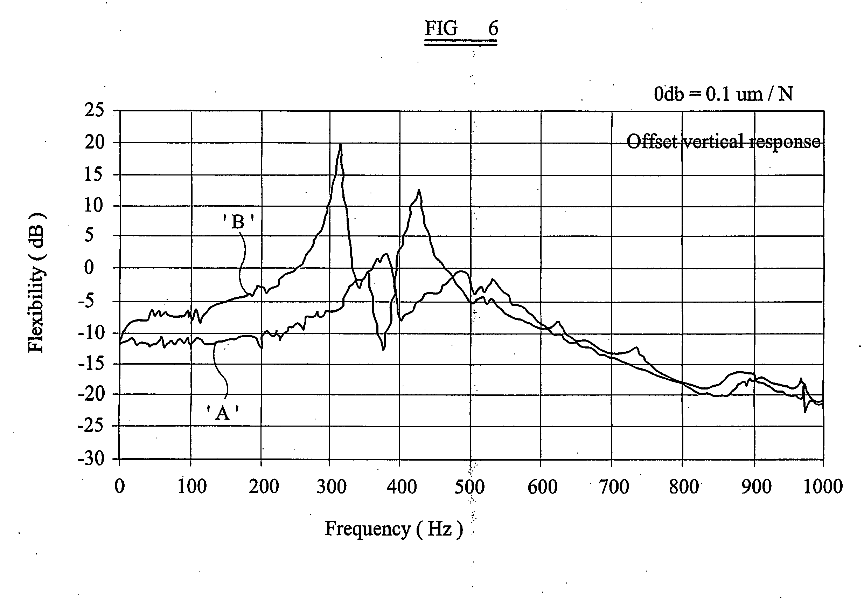

Fig 6 shows an example of the dynamic flexibility response of the carriage 32 at a mid-slide position, in a vertical direction with and without the damping device fitted. Without the damping device, the mode of vibration at a frequency of 315 Hz has a dynamic flexibility of 1.0 µm/N. With a single damping device fitted, the resonant frequency of this mode of vibration is increased to 385 Hz and its dynamic flexibility is significantly reduced to merely 0.14 µm/N. This represents a seven fold improvement in the slide's dynamic stiffness.

The damping device reduces flexibility at all five of the aerostatic slide's natural modes of vibration. Damping capacity in horizontal and vertical translation is determined by the parameters: gap, area, oil viscosity and V angle and is related to the slide's static stiffnesses and carriage weight. Damping in yaw and pitch modes of vibration depend on the length of the male slider part whereby increasing length, increases damping. Damping of the roll mode of vibration is achieved by mounting the damping device away from the carriage centre line.

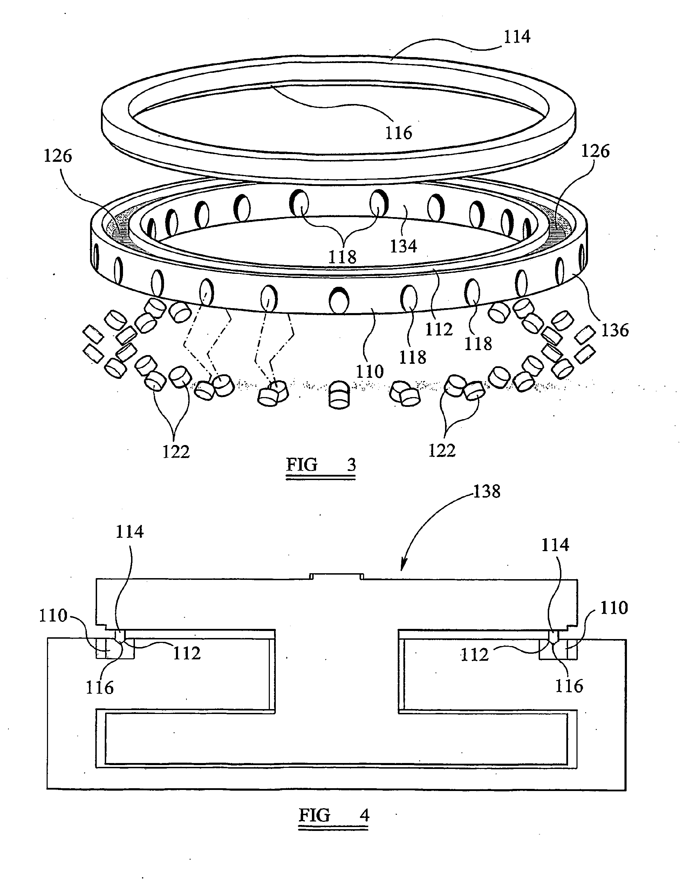

Referring now to Figure 3, a second embodiment of a damping device is shown. This damping device is similar to that of the first embodiment, and operates on the same principles. Therefore, like references refer to like parts, and further detailed description is omitted.

In this embodiment, a female part 110 and a male part 114 are both arcuately endless, typically being in the form of rings. A channel 112 of the female part 110 and the projecting portion 116 are both V-shaped, with complementary or substantially complementary lateral cross-sections, as discussed above.

The radially interior and exterior surfaces 134 and 136 of the female part 110 are provided with sets of spaced holes 118, and magnets 122 are again located in the holes 118. The polarity of the magnets 122 are as described above.

Magnetic oil 126 is provided in the channel 112, and the profiles of the projecting portion 116 of the male part 114 can again be relieved along a portion of its length, if necessary, to reduce, for example, viscous drag.

Figure 4 shows the damping device of the second embodiment rigidly attached to, or unitarily formed as part of, an aerostatic rotary table 138. In use, a squeeze film damping force is again generated when a gap between surfaces of the channel 112 and the projecting portion 116 is slightly closed due to imparted vibration.

The rotary table 138 also has five natural modes of vibration, three translational-vertical, radial X and radial Y, and two rotational about orthogonal radial axes through the table's centre. Damping capacity of the damping device in a translational mode of vibration is determined from the parameters, gap, area, oil viscosity and V angle and is related to table stiffness and rotating weight. Damping in tilt is also dependent on the diameter of the damping device. In this case, the diameter of the damping device is generally made as large as is practical.

If the damping devices described above are unitarily formed as part of the aerostatic device, the channel portion 12, 112 and the projecting portion 16, 116 can simply be formed on or in the aerostatic device.

Other shapes of channel and projecting portion can be used. It has been found that a channel having an arcuate lateral cross-section, for example semi-circular, and a projecting portion having a complementary or substantially complementary arcuate lateral cross-section provide excellent damping while better retaining the magnetic oil in place.

By use of the magnets and magnetic oil, the damping device can be utilised at any angle, including vertical. Furthermore, the female part can be seated on the male part, and ride or slide thereon.

The damping device can be used on any aerostatic device, including aerostatic spindles.

The damping of aerostatic devices can thus be dramatically improved. The damping device is simple in operation and cost-effective to produce. The damping device can be incorporated into a manufacturing process of an aerostatic device, or can be retrospectively fitted to existing devices. By utilising magnets and magnetic oil, the problem with continued lubrication is easily overcome.

## Claims

1. An aerostatic device for ultra precision machine tools, the aerostatic device having a damping device for use at any angle, including vertical, and comprising:
a male part (14;114) having a projecting portion (16; 116);
a female part (10; 110) having a channel (12; 112) in which the projecting portion (16; 116) of the male part (14;114) is slidably receivable;
means (22; 122) for providing a magnetic field, the magnetic field means (22; 122) being at or adjacent to the projecting portion (16; 116) of the male part (14;114) and/or the channel (12; 112) of the female part (10; 110); **characterised in that** the means (22, 122) for providing a magnetic field comprises sets of spaced apart holes (18) containing opposing magnets aligned along a longitudinal extent of the male or female part to form a uniform magnetic field and wherein
magnetic oil (26; 126) is interposed between the projecting portion (16; 116) of the male part (14; 114) and the channel (12; 112) of the female part (10; 110) and only within the magnetic field of the magnetic field means (22; 122), the in use magnetic oil (26; 126) being retained in or substantially in position by the magnetic field, so that undesirable movement of the male part (14;114) and/or female part (10; 110) is damped by the oil (26; 126) without the oil (26; 126) being displaced from the projecting portion (16; 116) and/or the channel (12; 112).

2. An aerostatic device as claimed in claim 1, wherein opposing magnets are located on, in or adjacent to the female part (10; 110).

3. An aerostatic device as claimed in claim 1 or claim 2, wherein the opposing magnets are located on, in or adjacent to the male part.

4. An aerostatic device as claimed claim 1, 2 or 3, wherein the channel (12; 112) of the female part (10; 110) and the projecting portion (16; 116) of the male part (14;114) have V-shaped or substantially V-shaped lateral cross-sections.

5. An aerostatic device as claimed in any one of claims 1 to 4, wherein the channel of the female part (10; 110) and the projecting portion of the male part (14; 114) have arcuate lateral cross-sections.

6. An aerostatic device as claimed in claim 4 or claim 5, wherein the lateral cross-sections of the channel (12; 112) of the female part (10; 110) and the projecting portion (16; 116) of the male part (14;114) match or substantially match.

7. An aerostatic device as claimed in claim 4 or claim 5, wherein the lateral cross-sections of the channel of the female part (10; 110) and the projecting portion of the male part (14; 144) in use approach each other at edges of the channel of the female part (10; 110).

8. An aerostatic device as claimed in any one of the preceding claims, wherein the male and female parts (14,10) of the damping device are rectilinear.

9. An aerostatic device as claimed in any one of claims 1 to 8, wherein the male and female parts (114,110) of the damping device are continuously arcuate.

10. An aerostatic device as claimed in any one of the preceding claims, wherein the male part (14; 114) and/or the female part (10; 110) of the damping device are integrally formed as part of an aerostatic bearing.

11. An aerostatic device as claimed in any one of claims 1 to 9, wherein the male part (14; 114) and/or the female part (10; 110) are attachable to a body of the aerostatic device.

12. An aerostatic device as claimed in any one of the preceding claims, wherein the aerostatic device is an aerostatic slide (28).

13. An aerostatic device as claimed in any one of claims 1 to 11, wherein the aerostatic device is an aerostatic rotary table (138).

14. An aerostatic device as claimed in any one of claims 1 to 11, wherein the aerostatic device is an aerostatic spindle.

## Patentansprüche

1. Aerostatische Vorrichtung für Ultrapräzisionswerkzeugmaschinen, wobei die aerostatische Vorrichtung eine Dämpfungsvorrichtung, zur Anwendung in jedem Winkel, einschließend senkrecht, und umfassend:
einen männlichen Teil (14; 114) mit einem vorstehenden Abschnitt (16; 116);
einen weiblichen Teil (10; 110) mit einem Kanal (12; 112), in dem der vorstehende Abschnitt (16; 116) des männlichen teils (14; 114) verschiebbar aufgenommen werden kann;
Mittel (22; 122) zum Bereitstellen eines Magnetfeldes, wobei sich die Magnetfeldmittel (22; 122) an oder neben dem vorstehende Abschnitt (16; 116) des männlichen Teils (14; 114) und/oder dem Kanal (12; 112) des weiblichen Teils (10; 110) befinden; **dadurch gekennzeichnet, dass** die Mittel (22; 122) zum Bereitstellen eines Magnetfeldes Gruppen von voneinander beabstandeten Löchern (18) umfassen, die gegenüberliegende Magnete enthalten, die entlang einer Längserstreckung des männlichen oder weiblichen Teils angeordnet sind, um ein einheitliches Magnetfeld zu bilden und wobei
Magnetöl (26; 126) zwischen dem vorstehenden Abschnitt (16; 116) des männlichen Teils (14; 114) und dem Kanal (12; 112) des weiblichen Teils (10; 110) und nur innerhalb des Magnetfeldes der Magnetfeldmittel (22; 122) eingefügt wird, wobei das benutzte Magnetöl (26; 126) durch das Magnetfeld in Position oder im Wesentlichen in Position gehalten wird, so dass eine unerwünschte Belegung des männlichen teils (14; 114) und/oder des weiblichen Teils (10; 110) durch das Öl (26; 126) gedämpft wird, ohne dass das Öl (26; 126) vorn vorstehenden Abschnitt (16; 116) und/oder dem Kanal (12; 112) verdrängt wird.

2. Aerostatische Vorrichtung nach Anspruch 1, wobei die gegenüberliegenden Magnete auf, in oder neben dem weiblichen Teil (10; 110) angeordnet sind.

3. Aerostatische Vorrichtung nach Anspruch 1 oder Anspruch 2, wobei die gegenüberliegenden Magnete auf, in oder neben dem männlichen Teil angeordnet sind.

4. Aerostatische Vorrichtung nach Anspruch 1, 2 oder 3, wobei der Kanal (12; 112) des weiblichen Teils (10; 110) und der vorstehende Abschnitt (16; 116) des männlichen Teils (14; 114) V-förmige oder im Wesentlichen V-förmige laterale Querschnitte haben.

5. Aerostatisehe Vorrichtung nach einem Ansprüche 1 bis 4, wobei der Kanal des weiblichen Teils (10; 110) und der vorstehende Abschnitt des männlichen Teils (14; 114) bogenförmige laterale Querschnitte haben.

6. Aerostatische Vorrichtung nach Anspruch 4 oder Anspruch 5, wobei die lateralen Querschnitte des Kanals (12; 112) des weiblichen Teils (10; 110) dem vorstehenden Abschnitt (16; 116) des männlichen Teils (14; 114) entspricht oder im Wesentlichen entspricht.

7. Aerostatische Vorrichtung nach Anspruch 4 oder Anspruch 5, wobei sich die lateralen Querschnitte des Kanals des weiblichen Teils (10; 110) und der vorstehende Abschnitt des männlichen Teils (14; 114) bei Anwendung an Rändern des Kanals des weiblichen Teils (10; 110) einander nähern.

8. Aerostatische Vorrichtung nach einem der vorhergehenden Ansprüche, wobei der männliche und weibliche Teil (14, 10) der Dämpfungsvorrichtung geradlinig sind.

9. Aerostatische Vorrichtung nach einem Ansprüche 1 bis 8, wobei der männliche und weibliche Teil (114, 110) der Dämpfungsvorrichtung durchgehend bogenförmig sind.

10. Aerostatische Vorrichtung nach einem der vorhergehenden Ansprüche, wobei der männliche Teil (14; 114) und/oder der weibliche Teil (10; 110) der Dämpfungsvorrichtung integral als Teil eines aerostatischen Lagers gebildet sind.

11. Aerostatische Vorrichtung nach einem der Ansprüche 1 bis 9, wobei der männliche Teil (14; 114) und/oder der weibliche Teil (10; 110) an einen Körper der aerostatischen Vorrichtung angebracht werden können.

12. Aerostatische Vorrichtung nach einem der vorhergehenden Ansprüche, wobei die aerostatische Vorrichtung ein aerostatischer Schlitten (28) ist.

13. Aerostatische Vorrichtung nach einem Ansprüche 1 bis 11, wobei die aerostatische Vorrichtung ein acrostatischer Drehtisch (138) ist.

14. Aerostatische Vorrichtung nach einem Ansprüche 1 bis 11, wobei die aerostatische Vorrichtung eine aerostatische Spindel ist.

## Revendications

1. Dispositif aérostatique pour machines-outils ultra précises, le dispositif aérostatique comportant un dispositif d'amortissement pour une utilisation à n'importe quel angle, y compris un angle vertical, et comprenant:
une partie mâle (14; 114) ayant une portion en saillie (16; 116);
une partie femelle (10; 110) ayant un canal (12; 112) dans lequel la portion en saillie (16; 116) de la partie mâle (14; 114) peut être reçue par glissement;
des moyens (22; 122) pour fournir un champ magnétique, les moyens de champ magnétique (22; 122) se trouvant au niveau de ou à proximité de la portion en saillie (16; 116) de la partie mâle (14; 114) et/ou du canal (12; 112) de la partie femelle (10; 110); **caractérisé e**n ce que les moyens (22; 122) pour fournir un champ magnétique comprennent des séries de trous (18) espacés contenant des aimants opposés alignés sur une longueur longitudinale de la partie mâle ou femelle pour former un champ magnétique uniforme, et dans lequel
une huile magnétique (26 ; 126) est interposée entre la portion en saillie (16 ; 116) de la partie mâle (14 ; 114) et le canal (12 ; 112) de la partie femelle (10 ; 110) et seulement à l'intérieur du champ magnétique des moyens de champ magnétique (22 ; 122), l'huile magnétique en utilisation (26 ; 126) étant retenue en position ou substantiellement en position par le champ magnétique, de sorte qu'un mouvement indésirable de la partie mâle (14 ; 114) et/ou de la partie femelle (10 ; 110) est amorti par l'huile (26 ; 126) sans que l'huile (26 ; 126) soit déplacée de la portion en saillie (16 ; 116) et/ou du canal (12; 112).

2. Dispositif aérostatique selon la revendication 1, dans lequel les aimants opposés sont situés sur, dans ou près de la partie femelle (10 ; 110).

3. Dispositif aérostatique selon la revendication 1 ou la revendication 2, dans lequel les aimants opposés sont situés sur, dans ou près de la partie mâle.

4. Dispositif aérostatique selon la revendication 1, 2 ou 3, dans lequel le canal (12 ; 112) de la partie femelle (10 ; 110) et la portion en saillie (16 ; 116) de la partie mâle (14 ; 114) ont des sections transversales latérales en forme de V ou substantiellement en forme de V.

5. Dispositif aérostatique selon l'une quelconque des revendications 1 à 4, dans lequel le canal de la partie femelle (10 ; 110) et la portion en saillie de la partie mâle (14 ; 114) ont des sections transversales latérales en forme d'arc.

6. Dispositif aérostatique selon les revendications 4 ou 5, dans lequel les sections transversales latérales du canal (12 ; 112) de la partie femelle (10 ; 110) et la portion en saillie (16; 116) de la partie mâle (14 ; 114) correspondent ou correspondent substantiellement.

7. Dispositif aérostatique selon la revendication 4 ou la revendication 5, dans lequel les sections transversales latérales du canal de la partie femelle (10 ; 110) et la portion en saillie de la partie mâle (14; 144) se rapprochent en utilisation au niveau de bords du canal de la partie femelle (10 ; 110).

8. Dispositif aérostatique selon l'une quelconque des revendications précédentes, dans lequel les parties mâle et femelle (14; 10) du dispositif d'amortissement sont rectilignes.

9. Dispositif aérostatique selon l'une quelconque des revendications 1 à 8, dans lequel les parties mâle et femelle (114 ; 110) du dispositif d'amortissage sont continuellement en forme d'arc.

10. Dispositif aérostatique selon l'une quelconque des revendication précédentes, dans lequel la partie mâle (14 ; 114) et/ou la partie femelle (10 ; 110) du dispositif d'amortissement sont intégralement formées en tant que partie d'un palier aérostatique.

11. Dispositif aérostatique selon l'une quelconque des revendications 1 à 9, dans lequel la partie mâle (14 ; 114) et/ou la partie femelle (10; 110) peuvent être montées sur un corps du dispositif aérostatique.

12. Dispositif aérostatique selon l'une quelconque des revendications précédentes, dans lequel le dispositif aérostatique est un chariot aérostatique (28).

13. Dispositif aérostatique selon l'une quelconque des revendications 1 à 11, dans lequel le dispositif aérostatique est une table de rotation aérostatique (138),

14. Dispositif aérostatique selon l'une quelconque des revendications 1 à 11, dans lequel le dispositif aérostatique est une broche aérostatique.
